# EUROPEAN PATENT APPLICATION

(11) **EP 2 178 349 A2**
(43) Date of publication of application: **21.04.2010**
(21) Application number: 09013003.0
(22) Date of filing: 14.10.2009
(51) Int. Cl.: H05B 41/32

(54) **Solar simulator**

(30) Priority: 15.10.2008 JP 2008266040
(71) Applicant: NPC Incorporated, Arakawa-ku Tokyo 116-0003 (JP)
(72) Inventor: Yoshino, Seiji, Tokyo 116-0003 (JP); Nakanishi, Yuji, Tokyo 116-0003 (JP); Hashimoto, Toru, Tokyo 116-0003 (JP); Ooki, Takashi, Tokyo 116-0003 (JP); Watanabe, Masaru, Tokyo 116-0003 (JP); Ito, Tomoaki, Tokyo 116-0003 (JP); Togawa, Yoshimasa, Tokyo 116-0003 (JP)
(74) Representative: Samson & Partner

(57) **Abstract**

Electric light emission continuous control unit (4) and a power absorbing unit (3). The electric light emission continuous control unit is provided with one or a plurality of large power elements (41) to be used as a control impedance, and the large power element (41) is continuously controlled to light a flash lamp to a determined light emission quantity. The power absorbing unit (3) is provided with one or a plurality of power absorbing elements (31), and an operation of the power absorbing element is selected in a switching unit (34), and thereby power consumption of the large power element (41) is controlled within a determined range.

## Description

### Background of the Invention

### 1. Field of the Invention

The present invention relates to a solar simulator used as pseudo sunlight when conducting performance evaluation of a solar cell, and particularly to a solar simulator having a unit for controlling a light emission luminance of a flash lamp.

### 2. Description of the Related Art

Conventionally, as a solar simulator for performance evaluation of a solar cell module, there has been practically applied a simple power storage device (which is called a capacitor, hereinafter) type long arc xenon flash lamp.

A principle of operation of the capacitor type flash lamp is such that a capacitor in which power is stored is connected to a low voltage long arc xenon lamp, and a high voltage is applied to an outside of a tube of the long arc xenon lamp, and discharge plasma is generated by a field emission electron from an inner cold cathode electrode, and electric charge of the capacitor is discharged in the plasma, thereby making the long arc xenon lamp emit light.

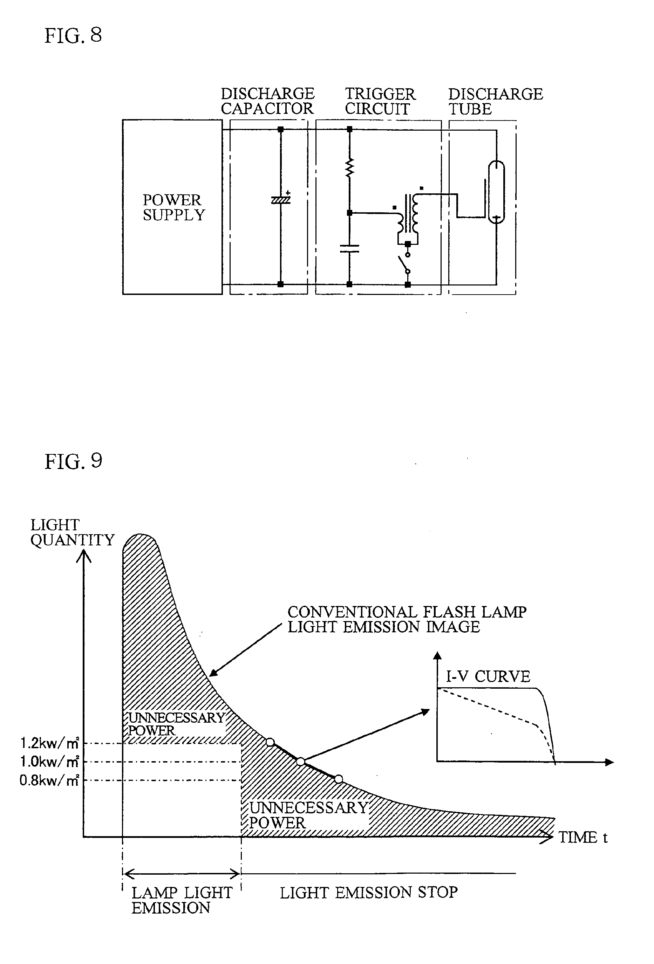

The above method has been used widely for a photograph illumination, a night signal, and the like because a total light emission quantity is easily controlled only by energy from the capacitor and a circuit is simple. However, the electric charge of the capacitor is reduced in accordance with the discharge and a light emission luminance is lowered exponentially with time, so that a constant light emission luminance cannot be obtained. However, if use of the capacitor type flash lamp is limited to a narrow range of a decreasing function, it is possible to use the capacitor type flash lamp for performance evaluation of a solar cell module by correcting variations. The capacitor type flash lamp as above is driven by a circuit where a discharge capacitor and a trigger circuit are provided between a power supply and a discharge tube as shown in FIG. 8, for example. Further, there is disclosed a power supply circuit for a xenon flash lamp in Japanese Patent Application Laid-open No. 2001-37095.

In such a flash lamp, it has been known that practically a light emission luminance of 1 kW/m² (± 20%) for several milliseconds suffices for conducting performance evaluation of a solar cell module.

FIG. 9 shows one example of relation between light quantity and time in the capacitor type flash lamp. The capacitor starts discharging, and thereby the flash lamp emits light. The light emission quantity is lowered exponentially with time. In performance evaluation of a solar cell module, it is only necessary to use the light emission quantity ranging from 0.8 kW/m² to 1.2 kW/m². In other words, the range used for measuring is a portion with respect to the total discharge of the capacitor, and therefore the discharge in a remaining portion (oblique lines portion in FIG. 9) becomes wasted. Due to this redundant discharge, the flash lamp and the capacitor deteriorate, and lifetimes of these are shortened.

Thus, several methods in which unnecessary discharge is stopped after measuring for performance evaluation ends are devised, and practically applied. However, a control of light emission by large discharge in an initial period from the start of the discharge up to the time when a light emission intensity suitable for measuring is obtained is not practically applied. The above is possible in principle, but a large-scale structure is required for the control, thereby canceling simplicity of the capacitor type flash lamp. Therefore, an apparatus corresponding to the simplicity is not practically applied until today.

In a flash lamp of a solar simulator for performance evaluation of a solar cell module, a control, which is 300 kW in power, 2000 A in current, and 800 V in voltage, is required to be performed for several ten µ seconds. The control of such electricity (power, current, and voltage are comprehensively abbreviated to electricity as long as it is not mentioned in particular) is difficult to be performed in rated power of an existing electronic element.

### Summary of the Invention

In an electric circuit, it is well-known that control of electricity is performed by disconnecting the circuit or providing a control impedance in the circuit. In direct current electricity, a continuous control circuit using an electronic element as a control impedance has been practically applied for a long time as a high-speed response and low noise control method, and it has been widely used. However, this method has a characteristic in which the control impedance acts as a load in principle, thereby consuming electricity. Therefore, it is not possible to control electricity that is equal to or more than an allowable power consumption of a control element configuring the control impedance.

In the case of a large power control in an electric motor of an electric train or the like, the control is performed by switching a resistor as the control impedance. On the other hand, up to approximately 10 kW, an electronic element is practically applied as the control impedance.

The present invention is to eliminate a discontinuous control being a defect of switching of a large power control and make a high-speed response and low noise control being a characteristic of a continuous control circuit possible by combing switching of an existing control impedance electronic element and a resistor. Accordingly, an object thereof is to light a flash lamp during only a range used for measuring in a solar simulator for performance evaluation of a solar cell module.

In order to solve the above-described problems, the present invention provides a solar simulator being a solar simulator for solar cell module performance evaluation, in which a flash lamp is used, the solar simulator including an electric light emission continuous control unit and a power absorbing unit, in which the electric light emission continuous control unit is provided with one or a plurality of large power elements to be used as a control impedance, and the large power element is continuously controlled to light the flash lamp to a determined light emission quantity, and the power absorbing unit is provided with one or a plurality of power absorbing elements, and an operation of the power absorbing element is selected in a switching unit, and thereby power consumption of the large power element is controlled within a determined range.

According to the present invention, by combining switching of a control impedance electronic element and a resistor, switching of a large power control can be performed continuously and in a high-speed response manner, and further a low noise control can be performed. Accordingly, in the solar simulator for performance evaluation of a solar cell module, it is possible to light a flash lamp during only a range used for measuring by a constant current. Therefore, deteriorations of the flash lamp and a capacitor can be reduced.

### Brief Description of the Drawings

FIG 1 is a block diagram showing a principle of the present invention;

FIG 2 is a block diagram showing an embodiment of the present invention;

FIGs. 3 are graphs explaining a setting region of a voltage in FIG. 2;

FIGs. 4 are graphs showing a voltage in the case when there is variation in a resistance value of a power absorbing block;

FIG 5 is a block diagram showing a different embodiment of the present invention;

FIG 6 is a block diagram showing a further different embodiment of the present invention;

FIG 7 is a block diagram showing a further different embodiment of the present invention;

FIG 8 is a circuit diagram showing a conventional capacitor type flash lamp; and

FIG 9 is a graph showing an example of relation between light quantity of the capacitor type flash lamp and time.

### Detailed Description of the Invention

Hereinafter, embodiments of the present invention will be explained with reference to the drawings. Note that in the present specification and the drawings, the same reference numerals and symbols are given to components having substantially the same functional structure and redundant explanation thereof is omitted.

In performance evaluation of a solar cell module, it is obvious that a light quantity correction is in principle unnecessary as long as light emission of a flash lamp can be controlled to a constant light quantity. Further, approximately several milliseconds for a measuring time suffice. Thus, light emission may be stopped right after light emission with a constant light quantity, and thereby, it is possible to reduce total power applied to each of components and to expect that a lifetime of each of the components is largely extended. In order to achieve the above, there is considered a control method using an electric control circuit in which a large power element, for example, an IGBT (Insulated Gate Bipolar Transistor) or the like is used.

However, when a flash lamp of a solar simulator for solar cell module performance evaluation is lit, a large amount of power as large as 300 kW is required in order to obtain a light quantity of 1 kW/m², which is necessary for conducting performance measuring of a solar cell. Therefore, even in the case of being an element for large power, the element is destroyed in a matter of seconds. For example, in the case when a high voltage of 700 V is applied to a lamp and a constant current of 700 A is driven, the power to be consumed in the lamp is 300 kW, and the power to be consumed in a semiconductor is 190 kW. An IGBT module for large power has a limit of several kW, and cannot withstand.

Thus, there is considered a method in which a power absorbing element such as a resistor is interposed between a lamp and a large power element, thereby absorbing unnecessary power. Solar cell module performance evaluation is standardized in a manner that measuring is conducted at three types of patterns of light quantities (0.8 kW/m², 1.0 kW/m², 1.2 kW/m²). Therefore, it is necessary to correspond to three types of electric controls in accordance with the light quantities. Further, when it is considered that a lamp is used for a long period of time, and a light quantity thereof is reduced due to a lifetime of the lamp, the electric control is required to be variable in a wide range.

Hereinafter, there will be described an example where a resistor is used as the power absorbing element. The electric control cannot be performed with the single resistor in order to be variable in a wide range. It is necessary to use a semiconductor in an active region in order to exhibit a characteristic of the semiconductor. For example, in the case of the IGBT, ten odd V or more are necessary for a collector-to-emitter voltage. However, a variable range is very wide, which is several hundred A, and when a resistance value is determined corresponding to a current lower limit value, as for a current upper limit value, the collector-to-emitter voltage of the IGBT becomes small because a voltage drop in the resistor is very large. Therefore, the IGBT is deviated from an active region thereof. That is, it is necessary to vary a resistance value dynamically in accordance with a current value.

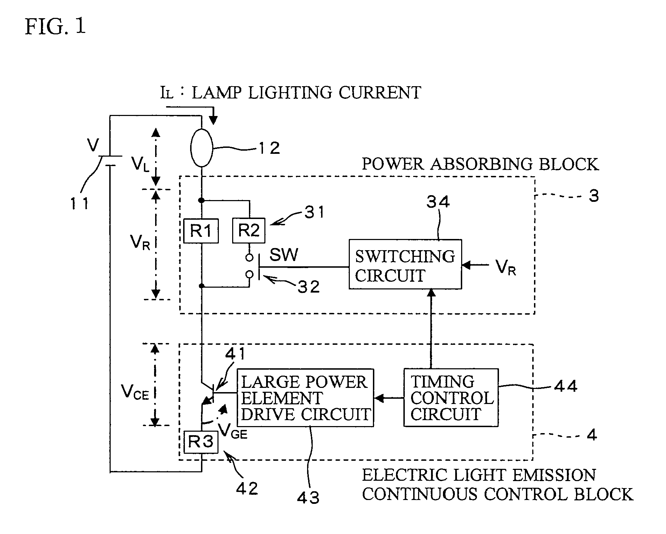

Thus, hereinafter, there will be explained a principle of operation of the present invention with reference to FIG. 1. The present invention, as shown in FIG. 1, is structured by a power supply 11, a flash lamp 12, a power absorbing block 3, and an electric light emission continuous control block 4. The power absorbing block 3 is structured by one or more power absorbing elements 31 (R1, R2), one or more power absorbing element switching switches 32 (SW), and a switching circuit 34. The electric light emission continuous control block 4 is structured by one or more large power elements 41 (IGBT), a current equalization resistor 42 (R3), a large power element drive circuit 43, and a timing control circuit 44.

The large power element 41 (IGBT) is used as a continuous control impedance, and is controlled continuously so that the flash lamp is lit with a light emission quantity set previously. Further, in the power absorbing block 3, the switching circuit 34 turns the power absorbing element switching switch 32 OFF/ON to switch the power absorbing elements 31 dynamically, in order to change power consumption so that the large power element 41 in the electric light emission continuous control block 4 can operate normally.

In other words, the power absorbing element 31 (R1) absorbs power so that power consumption I_{L} • V_{CE} of the large power element 41 does not exceed a rated power. In the case when I_{L} is large, namely in the case of V_{CE} = V - (V_{L} + I_{L} • R1) < 10V, V_{CE} falls outside a control range. In the above case, the power absorbing element switching switch 32 is turned ON to make I_{L} • R1 small to be I_{L} • (R1//R2) and raise V_{CE}, resulting that V_{CE} enters the control range.

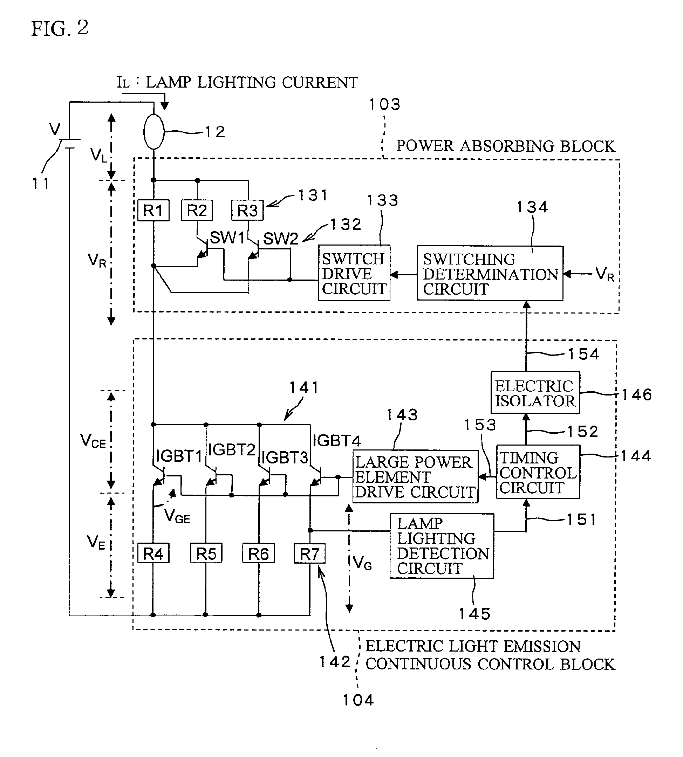

A first embodiment in the solar simulator for solar cell module performance evaluation of the present invention is shown in FIG. 2.

This embodiment, as shown in FIG. 2, is structured by a power supply 11, a flash lamp 12, a power absorbing block 103, and an electric light emission continuous control block 104. The power supply 11 and the flash lamp 12 are similar to those in a capacitor type flash lamp that has been used conventionally. The power absorbing block 103 has power absorbing elements 131 composed of three elements (R1, R2, R3), power absorbing element switching switches 132 composed of two switches (SW1, SW2), a switch drive circuit 133, and a switching determination circuit 134. This power absorbing block 103 monitors a voltage V_{R} and selects an operation of the power absorbing elements 131 (R1, R2, R3) by the voltage V_{R}, and this makes it possible to supply a voltage within an allowable range to a voltage V_{CE} of large power elements 141 (IGBT1 to IGBT4) in the electric light emission continuous control block 104, which will be described later.

The electric light emission continuous control block 104 has the large power elements 141 composed of the four elements (IGBT1, IGBT2, IGBT3, IGBT4), current equalization resistors 142 composed of four resistors (R4, R5, R6, R7) corresponding to the respective large power elements 141, a large power element drive circuit 143, a timing control circuit 144, a lamp lighting detection circuit 145, and an electric isolator 146.

A setting value of a current value (light quantity) flowing to the flash lamp 12 is stored in the large power element drive circuit 143 before performing light emission. The large power element drive circuit 143 determines a control voltage V_{G} of the large power elements 141 (IGBT1 to IGBT4) in accordance with this setting value to make a current flowing to the flash lamp 12 become the current value.

The lamp lighting detection circuit 145 detects by a voltage V_{E} of the large power elements 141 (IGBT1 to IGBT4) that the flash lamp 12 is lit and has a light quantity with which solar cell module performance evaluation can be conducted, and transmits control start to the timing control circuit 144.

The timing control circuit 144 receives a lighting detection signal 151 from the lamp lighting detection circuit 145 and turns a control permission signal 153 ON to notify the large power element drive circuit 143 of light emission start. Further, similarly, the timing control circuit 144 turns a control permission signal 152 ON and notifies the switch drive circuit 133 of light emission start by a control permission signal 154 via the electric isolator 146. Further, after turning the control permission signals 152, 153 ON, the timing control circuit 144 monitors time and turns the control permission signals 152, 153 OFF when a predetermined period of time (time from the start to end of light emission) passes. Further, after a predetermined period of time (time taken for a capacitor in the power supply 11 to be charged after the power supply 11 is turned OFF) passes, the timing control circuit 144 turns the control permission signal 153 ON to the large power element drive circuit 143.

The electric isolator 146 is an electronic circuit that insulates the electric light emission continuous control block 104 and the power absorbing block 103 electrically and transmits control information (a signal).

The switching determination circuit 134, the timing control circuit 144, and the lamp lighting detection circuit 145 are achieved by an analogue computer, a digital computer, or alternatively a combination of these.

This embodiment structured as above operates as below in solar cell module performance evaluation.

A current value (light quantity) flowing to the flash lamp 12 is set in the large power element drive circuit 143. A current value to be set here is set corresponding to three types of patterns of light quantities (0.8 kW/m², 1 kW/m², 1.2 kW/m²) for conducting performance measuring of a solar cell module.

In accordance with the current value set in the large power element drive circuit 143, the large power element drive circuit 143 determines a voltage value of a gate voltage V_{G} of the large power elements 141 in the electric light emission continuous control block 104 to make a current flowing to the flash lamp 12 become the current value. When the voltage value is determined, a logical product of the voltage value and the control permission signal 152 of the timing control circuit 144 is taken, and the gate voltage V_{G} of the large power elements 141 is output. Note that the control permission signal 152 of the timing control circuit 144 is ON at the time when power of a solar simulator main body for solar cell module performance evaluation is applied. However, at this time, a lamp lighting current I_{L} from the power supply 11 does not flow because there is no discharge start trigger of the power supply 11.

A lamp trigger voltage of the power supply 11 is applied in order that the solar simulator starts discharging. Accordingly, the lamp lighting current I_{L} flows. The power supply 11 starts discharging by pressing, for example, a discharging start (trigger) switch (illustration thereof is omitted), or the like.

When the lamp lighting current I_{L} starts flowing, the lamp lighting detection circuit 145 monitors the voltage V_{E} of the large power elements 141 (IGBT1 to IGBT4), and detects by V_{E} that the flash lamp 12 is lit and has a light quantity with which measuring of a solar cell module can be conducted. When detecting the above, the lamp lighting detection circuit 145 transmits start to the timing control circuit 144 by the lighting detection signal 151.

The timing control circuit 144 turns a control permission signal 154 to the switching determination circuit 134 ON via the electric isolator 146 and turns the control permission signal 153 to the large power element drive circuit 143 ON by the lighting detection signal 151 from the lamp lighting detection circuit 145, thereby notifying the large power element drive circuit 143 and the power absorbing block 103 of control start.

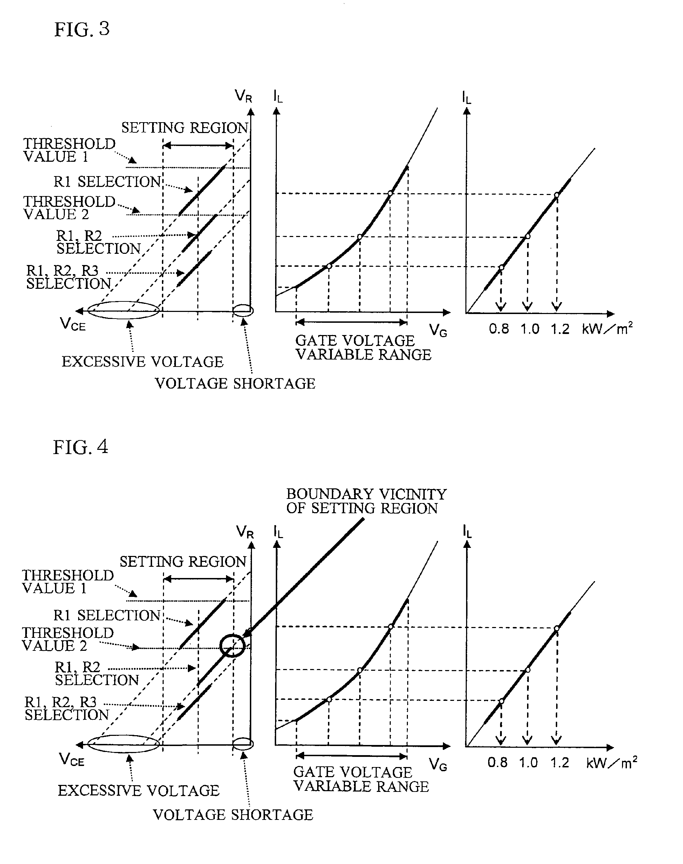

By the control start, the power absorbing block 103 determines a resistance value of the power absorbing block 103 so that the electric light emission continuous control block 104 can operate in an active range. Concretely, as shown in FIGs. 3, when one of the three types of patterns of light quantities for conducting the performance measuring of a solar cell module is determined, firstly, the lamp lighting current I_{L} is determined by a graph on the right side in FIGs. 3. The gate voltage V_{G} to obtain this lamp lighting current I_{L} is determined by a graph in the middle in FIGs. 3, and is stored in the large power element drive circuit 143 as a setting value. In accordance with the setting value, the large power element drive circuit 143 controls the gate voltage V_{G} so that the lamp lighting current I_{L} flows, and determines V_{CE}. The large power elements 141 in the electric light emission continuous control block 104 cannot operate as a constant current operation in the case of the voltage V_{CE} being too small, further, in the case of it being too large, the large power elements 141 have a possibility to break. V_{CE} is controlled to fall within a setting region shown by a graph on the left side in FIGs. 3 in order to make the large power elements 141 operate in an active range.

In order to maintain V_{CE} within the setting region, only the power absorbing element 131 (R1) is selected in the power absorbing block 103 while the control permission signal 152 from the timing control circuit 144 is OFF. Accordingly, the power absorbing element switching switches 132 (SW1, SW2) are turned OFF, and the power absorbing elements 131 (R2, R3) are not selected. In this manner, an initial voltage V_{R} is determined.

The switching determination circuit 134 determines whether or not V_{R} exceeds a threshold value 1 and a threshold value 2, which are determined previously, in traces of the voltage V_{R} across the power absorbing elements 131 proportional to the lamp lighting current I_{L} and the voltage V_{CE}. These are determined in such a way whether a voltage value to be added to V_{CE} is within a setting region of the large power elements 141 (IGBT1 to IGBT4). The case when V_{R} exceeds the threshold values indicates that V_{CE} falls outside the setting region due to a shortage of the voltage V_{CE}, and in the above case, the resistance value is varied, thereby making V_{CE} maintained within the setting region.

Concretely, after lighting start, the lamp lighting current I_{L} is increased as time passes, and V_{R} is increased. When V_{R} exceeds the threshold value 1, the switching determination circuit 134 turns the power absorbing element switching switch 132 (SW1) ON in order to select the power absorbing element 131 (R2) in addition to the power absorbing element 131 (R1). Alternatively, when it is known previously, the switching determination circuit 134 sets to select a predetermined power absorbing element 131 regardless of the threshold values. Further, in the case when the lamp lighting current I_{L} is increased continuously and V_{R} exceeds the threshold value 2, the switching determination circuit 134 further turns the power absorbing element switching switch 132 (SW2) ON to select the power absorbing element 131 (R3) in addition to the power absorbing elements 131 (R1, R2). For example, in the case when respective resistance values of the power absorbing elements 131 (R1, R2, R3) are the same resistance value 1Ω, the resistance value of the power absorbing block 103 is switched to 1 Ω, 1/2 Ω, or 1/3 Ω by switching of a range. As a result, although the lamp lighting current I_{L} is increased as time passes, the resistance value is decreased. In other words, V_{R} is varied accordingly, so that it is possible to make V_{CE} within the setting region.

The switch drive circuit 133 turns the corresponding power absorbing element switching switches 132 (SW1, SW2) ON/OFF in accordance with an output signal of the switching determination circuit 134.

On the other hand, in the electric light emission continuous control block 104, although the lamp lighting current I_{L} is increased as time passes, the operation does not change, and the voltage V_{G} of the large power elements 141 is output continuously.

After turning the control permission signals 152, 153 ON, the timing control circuit 144 monitors time, and turns the control permission signal 154 to the switch drive circuit 133 and the control permission signal 153 to the large power element drive circuit 143 OFF after a predetermined period of time, namely time from the start to end of light emission, passes.

The switch drive circuit 133 cuts the voltage V_{R} of the power absorbing element switching switches 132 (SW1, SW2) OFF because the control permission signal 154 is turned OFF.

The large power element drive circuit 143 cuts the voltage V_{G} of the large power elements 141 (IGBT1 to IGBT4) OFF because the control permission signal 153 is turned OFF. Accordingly, the large power elements 141 (IGBT1 to IGBT4) are turned OFF and the lamp lighting current I_{L} does not flow.

The lamp lighting current I_{L} does not flow, and therefore, in the power supply 11, a switch in the power supply 11 is turned OFF, and the lamp lighting current I_{L} does not flow from the power supply 11. Then, charging of the capacitor in the power supply 11 is started. This operation of the power supply 11 is similar to that of a conventional power supply. However, in this embodiment, compared with the prior art, power consumption of the energy charged in the capacitor is small, so that a charging time for the following lighting results in a short time.

Further, the timing control circuit 144 turns the control permission signal 153 to the large power element drive circuit 143 ON after a period of time taken for the capacitor in the power supply 11 to be charged after the power supply 11 is turned OFF passes. The control permission signal 154 to the switch drive circuit 133 via the electric isolator 146 remains OFF. The above indicates that a preparation to perform the following light emission is made.

According to the above operation, it is possible to make the flash lamp emit light during only a range used for the solar cell module performance evaluation, and to control a light quantity to the flash lamp to be a determined light quantity. Therefore, loads of the flash lamp and the capacitor can be reduced so that deteriorations of the flash lamp and the capacitor can be reduced.

In the embodiment shown in FIG. 2, the power absorbing block 103 has the three power absorbing elements 131 (R1 to R3), and three types of resistance values can be selected as the resistance value of the power absorbing block 103. In principle, the electric control of the light emission luminance of the flash lamp can be achieved by the selection of these three types of resistance values. However, if there is variation in the resistance value of the power absorbing block 103, as shown in FIGs. 4, there is sometimes a case that the voltage value to be added to V_{CE} selects a boundary vicinity of the setting region of the large power elements 141 (IGBT1 to IGBT4), and due to a voltage shortage, there is sometime a case that the large power elements 141 (IGBT1 to IGBT4) do not start appropriate operation.

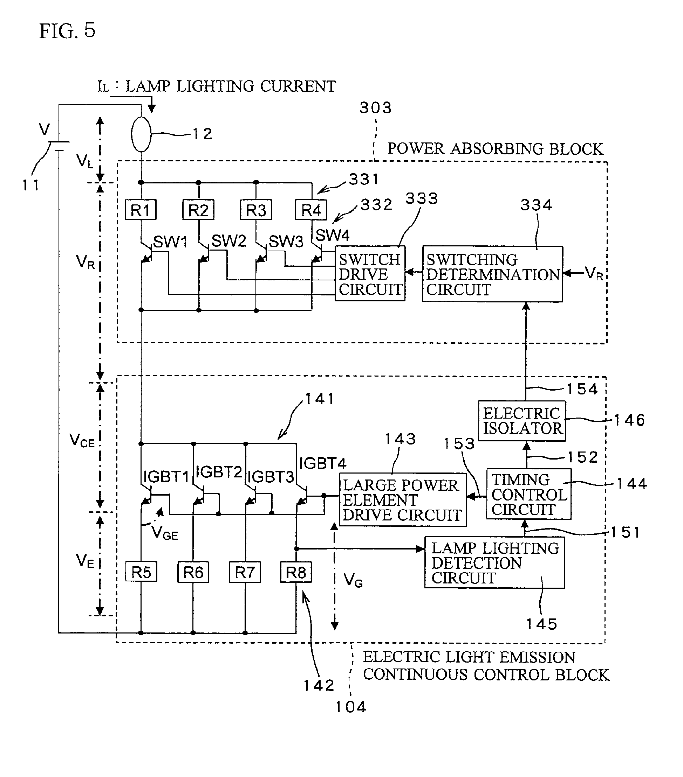

An embodiment to avoid the above is shown in FIG. 5. In FIG. 5, a point different from FIG. 2 is a structure of a power absorbing block 303, and a structure of an electric light emission continuous control block 104 is similar to that in FIG. 2. The power absorbing block 303 has power absorbing elements 331 composed of four elements (R1, R2, R3, R4), power absorbing element switching switches 332 composed of four switches (SW1, SW2, SW3, SW4) corresponding to the respective power absorbing elements 331, a switch drive circuit 333, and a switching determination circuit 334. This power absorbing block 303 monitors a voltage of V_{R} to select the power absorbing elements 331 (R1 to R4) by weighting by the voltage, and this makes it possible to supply an optimum voltage to a voltage V_{CE} of large power elements 141 (IGBT 1 to IGBT4) in the electric light emission continuous control block 104.

For example, as shown in Table 1, resistance values of the power absorbing elements 331 (R1 to R4) are set to be 0.4 Ω, 0.6 Ω, 0.8, Ω, and 1.0 Ω respectively, and weighting from the switching determination circuit 334 is performed to select a resistance value of the power absorbing block 303. The resistance values of the power absorbing elements 331 (R1 to R4) can be selected minutely by the weighting, so that it is possible to set a voltage value to be added to V_{CE} in a vicinity of a middle of a setting region of the large power elements 141 (IGBT1 to IGBT4). Accordingly, even when there is variation in the resistance value of the power absorbing block 303, a predetermined current can be obtained.

In FIG. 5, a large power element drive circuit 143, in accordance with a set light quantity, controls a voltage V_{G} so that a lamp lighting current I_{L} flows, and determines V_{CE}. However, there are variations in static characteristics of the large power elements 141 (IGBT1 to IGBT4) in the electric light emission continuous control block 104. Therefore, current balances of the respective large power elements 141 are bad, and there is sometimes a case that a current concentration is generated in a specific semiconductor.

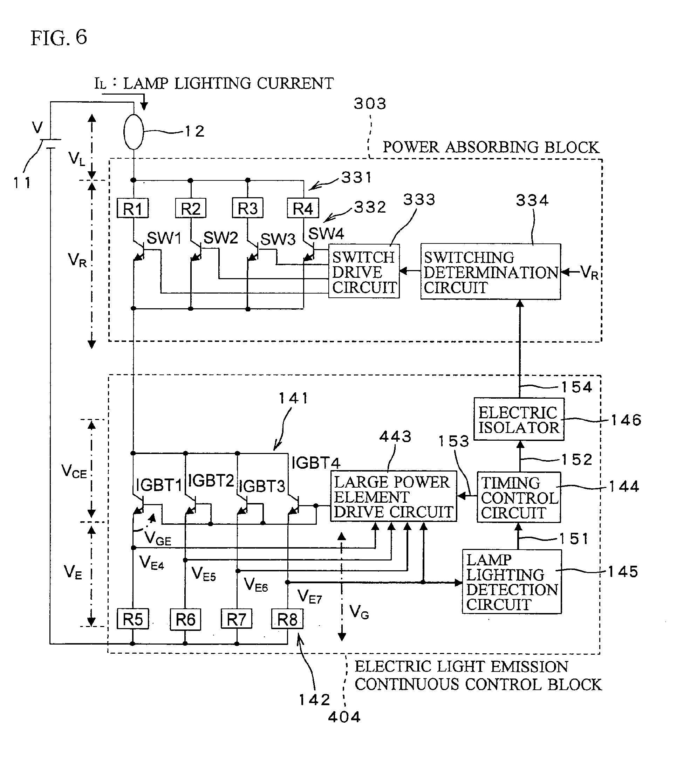

An embodiment to avoid the above is shown in FIG. 6. In FIG. 6, a point different from FIG. 5 is a structure of an electric light emission continuous control block 404. The electric light emission continuous control block 404 has large power elements 141 (IGBT1 to IGBT4), current equalization resistors 142 (R5 to R8), a large power element drive circuit 443, a timing control circuit 144, a lamp lighting detection circuit 145, and an electric isolator 146.

In the electric light emission continuous control block 404, the large power element drive circuit 443 monitors respective voltages V_{E} of the large power elements 141 (IGBT1 to IGBT4) individually.

In the electric light emission continuous control block 404 as above, firstly, a flash lamp 12 is lit by an appropriate lamp lighting current I_{L}. At this time, the large power element drive circuit 443 in the electric light emission continuous control block 404 monitors respective voltages V_{E4}, V_{E5}, V_{E6}, and V_{E7} of the large power elements 141 (IGBT1 to IGBT4), and stores the voltages V_{E}. In accordance with the stored voltages V_{E}, variations in the large power elements 141 (IGBT1 to IGBT4) are obtained and voltages V_{G} of the large power elements 141 (IGBT1 to IGBT4) are corrected to make current balances of IGBT1 to IGBT4 become equal.

In the case of performing light emission subsequently, the large power element drive circuit 443 drives the large power elements 141 (IGBT1 to IGBT4) by using the voltages V_{G} corrected respectively. Accordingly, even when there are variations in the large power elements 141 (IGBT1 to IGBT4), currents flowing to the large power elements 141 (IGBT1 to IGBT4) can be equalized.

On the other hand, there is sometimes a case that a light quantity is reduced due to a characteristic of the flash lamp 12. When a light quantity is reduced, a precise solar cell module performance evaluation result cannot be obtained.

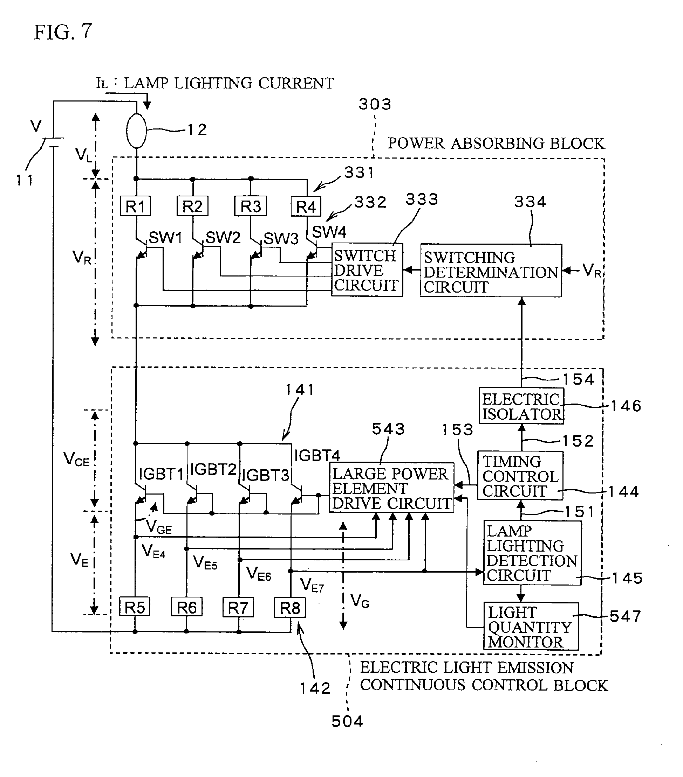

An embodiment to avoid the above is shown in FIG. 7. In FIG. 7, a point different from FIG. 6 is a structure of an electric light emission continuous control block 504. The electric light emission continuous control block 504 has large power elements 141 (IGBT1 to IGBT4), current equalization resistors 142 (R5 to R8), a large power element drive circuit 543, a timing control circuit 144, a lamp lighting detection circuit 145, an electric isolator 146, and a light quantity monitor 547.

In the electric light emission continuous control block 504 as above, firstly, a flash lamp 12 is lit by an appropriate lamp lighting current I_{L}. At this time, the light quantity monitor 547 monitors a light quantity of the flash lamp 12 by a lighting detection signal 151 from the lamp lighting detection circuit 145, and stores the light quantity at that time.

The large power element drive circuit 543 in the electric light emission continuous control block 504 obtains a reduction amount of a light quantity in accordance with the light quantity stored in the light quantity monitor 547. The large power element drive circuit 543 corrects voltages V_{G} of the large power elements 141 (IGBT1 to IGBT4) in accordance with the obtained reduction amount of the light quantity. Note that in this correction, as for variations of the large power elements 141 (IGBT1 to IGBT4) as well, the voltages V_{G} of the large power elements 141 (IGBT1 to IGBT4) are corrected similarly to that in the embodiment in FIG. 6.

In the case of performing light emission subsequently, the large power element drive circuit 543 drives the large power elements 141 (IGBT1 to IGBT4) by using the voltages V_{G} corrected respectively. Accordingly, even when there is a reduction in a light quantity, a constant light emission luminance can be obtained by correcting a light quantity. Therefore, a precise solar cell module performance evaluation result can be obtained.

Preferred embodiments of the present invention have been described above, but the present invention is not limited to the embodiments. It should be understood that various changes and modifications are readily apparent to those skilled in the art within the scope of the technical spirit as set forth in claims, and those should also be covered by the technical scope of the present invention.

The present invention is useful as an apparatus controlling a light emission luminance of a lamp in which large power is required.

**TABLE 1**

| R1=0.4 Ω | R2=0.6 Ω | R3=0.8 Ω | R4=1.0 Ω | RESISTANCE VALUE Ω OF POWER ABSORBING BLOCK |
|---|---|---|---|---|
| 0 | 0 | 0 | 0 | - |
| 0 | 0 | 0 | 1 | 1.00 |
| 0 | 0 | 1 | 0 | 0.80 |
| 0 | 0 | 1 | 1 | 0.44 |
| 0 | 1 | 0 | 0 | 0.60 |
| 0 | 1 | 0 | 1 | 0.63 |
| 0 | 1 | 1 | 0 | 0.34 |
| 0 | 1 | 1 | 1 | 0.20 |
| 1 | 0 | 0 | 0 | 0.40 |
| 1 | 0 | 0 | 1 | 0.29 |
| 1 | 0 | 1 | 0 | 0.27 |
| 1 | 0 | 1 | 1 | 0.15 |
| 1 | 1 | 0 | 0 | 0.24 |
| 1 | 1 | 0 | 1 | 0.12 |
| 1 | 1 | 1 | 0 | 0.11 |
| 1 | 1 | 1 | 1 | 0.07 |

## Claims

1. A solar simulator for solar cell module performance evaluation, in which a flash lamp is used, the solar simulator comprising:
an electric light emission continuous control unit and a power absorbing unit, and wherein
said electric light emission continuous control unit is provided with one or a plurality of large power elements to be used as a control impedance, and the large power element is controlled continuously to light the flash lamp to a determined light emission quantity, and
said power absorbing unit is provided with one or a plurality of power absorbing elements, and an operation of the power absorbing element is selected in a switching unit, and thereby power consumption of the large power element is controlled within a determined range.

2. The solar simulator according to claim 1, wherein
said electric light emission continuous control unit has a detection unit of a light quantity of the flash lamp, and the large power element is controlled to make the light quantity become a determined value.

3. The solar simulator according to claim 1, wherein
said electric light emission continuous control unit has a unit individually detecting a control output value by the large power element, and a control input value is corrected to make the control output value become a determined value.

4. The solar simulator according to claim 1, wherein
the large power element is controlled dynamically by an analogue computer, a digital computer, or both of the analogue computer and the digital computer.

5. The solar simulator according to claim 1, wherein
the switching unit is operated by a control of the large power element.

6. The solar simulator according to claim 1, wherein
said power absorbing unit is connected to said electric light emission continuous control unit via an electric isolator.
